# EUROPÄISCHE PATENTSCHRIFT

(11) **EP 2 179 281 B1**
(45) Veröffentlichungstag und Bekanntmachung des Hinweises auf die Patenterteilung: **05.10.2016**
(21) Anmeldenummer: 08760284.3
(22) Anmeldetag: 30.05.2008
(51) Int. Cl.: G01N 29/28

(54) **ULTRASCHALL-PRÜFVORRICHTUNG MIT CLUSTERGEHÄUSE**
ULTRASOUND TEST DEVICE WITH CLUSTER HOUSING
DISPOSITIF DE CONTRÔLE PAR ULTRASONS MUNI D'UN BOÎTIER CLUSTERISÉ

(30) Priorität: 20.08.2007 DE 102007039325
(43) Veröffentlichungstag der Anmeldung: 28.04.2010
(73) Patentinhaber: GE Sensing & Inspection Technologies GmbH, 50354 Hürth (DE)
(72) Erfinder: MEINERT, Damian, 40764 Langenfeld (DE); FALTER, Stephan, 52152 Simmerath (DE); LINGENBERG, Dieter, 50354 Hürth (DE); PRAUSE, Reinhard, 53757 St. Augustin (DE); VIERHAUS, Rainer, 50259 Puhlheim (DE)
(74) Vertreter: Patentanwälte Bauer Vorberg Kayser
(86) Internationale Anmeldenummer: PCT/EP2008/056696
(87) Internationale Veröffentlichungsnummer: WO 2009/024366

(56) Entgegenhaltungen:
- EP-A- 0 556 635
- JP-A- 58 092 949
- US-A- 2 873 391
- US-A- 3 420 097
- US-A1- 2004 016 299
- US-B1- 6 298 727

## Beschreibung

Die vorliegende Erfindung betrifft eine Ultraschall-Prüfvorrichtung für die Prüfung von rohrförmigen Werkstücken, die mittels eines Fluids an das Werkstück ankoppelbar ist.

Die Prüfung rohrförmiger Werkstücke ist u.a. deshalb sehr anspruchsvoll, weil eine ausreichende und störungsfreie Ankopplung der Ultraschall-Prüfvorrichtung schwieriger ist. Weiterhin ist die Intensität der empfangenen Signale sehr stark von der Oberflächengeometrie abhängig, weswegen in der DE 27 40 106 sogar ein Prüfkopf vorgeschlagen wird, der mittels einer Schallschwächungsmessung die Ausrichtung zweier weiterer, außenliegender Prüfköpfe entsprechend der Oberflächengeömetrie des zu prüfenden Werkstücks bestimmt. Diese Vorrichtung bzw. das zugrunde liegende Verfahren ist aufwendig und kostenintensiv.

Aus der DE 27 51 810 ist eine Prüfvorrichtung zum zerstörungsfreien Prüfen bekannt, bei der in einer Prüfspinne insgesamt sechs Prüfköpfe angeordnet sind, deren Schallstrahlen sich in einem Punkt schneiden. Die schallübertragende Ankopplung erfolgt durch Zufuhr von Wasser in die Berührungsebene. Nachteilig bei dieser Anordnung ist, dass das Koppelmedium in unkontrollierter Weise zugeführt wird, der Aufwand für die Ankoppelkontrolle ist somit sehr hoch.

Gattungsgemässe Prüfvorrichtungen sind weiterhin aus US 3420097 und US 2004/0016299 bekannt.

Die EP 0 472 252 B1 beschreibt eine Prüfvorrichtung, bei der eine Kammer vorgesehen ist, die mit einem Fluid gefüllt wird und sich zwischen einer Schwingereinheit und dem Werkstück befindet. Der zentrale, fluidführende Kanal der Kammer ist in mehrere separate Kanäle aufgeteilt, wobei die Anzahl der Kanäle der Anzahl der angeordneten Prüfköpfe entspricht. Grundsätzlich funktioniert ein solcher Prüfkopf relativ gut, allerdings kommt es aufgrund der Mehrzahl von Kanälen zu einer verstärkten Verwirbelung des Fluids und damit oftmals auch zur Blasenbildung.

Bei einem so genannten Cluster GEIT sind nur relativ kleine Wasseraustrittsöffnungen vorgesehen, was wiederum zu relativ kleinen Schallaustrittsöffnungen führt. Hierdurch ist nur eine begrenzte bzw. speziell angeordnete Anzahl von Prüfköpfen möglich.

Um eine möglichst schnelle und vollständige Befüllung der Kammer eines Clusters mit dem Fluid zu erreichen, kann zwischen der Schwingereinheit und dem Werkstück eine Folie angeordnet werden, die die Kammer sozusagen verkleinert. Grundsätzlich ist dadurch das Befüllen der Kammer zwar schneller möglich, trotzdem ist die Befüllung des Koppelspalts ohne Luftblasen kaum zu realisieren. Hinzu kommt, dass die Folie zunehmend verschmutzt und somit eine immer stärker werdende Schalldämpfung verursacht. Unabhängig davon können derartige Folien auch Störechos verursachen.

Die Aufgabe der vorliegenden Erfindung besteht darin, eine Ultraschall-Prüfvorrichtung zu schaffen, mit der eine möglichst schnelle und genaue Prüfung von rohrförmigen Werkstücken möglich ist. Die Ultraschall-Prüfvorrichtung soll dabei möglichst einfach aufgebaut und zu bedienen sein.

Erfindungsgemäß wird die Aufgabe durch eine Ultraschall-Prüfvorrichtung mit den Merkmalen des Anspruchs 1 gelöst.

Die erfindungsgemäße Ultraschall-Prüfvorrichtung weist demnach ein Clustergehäuse auf, das auf der äußeren Mantelfläche des Werkstücks, also auf der Rohroberfläche, mit einer durchmesserangepassten Schleißsohle abschließt. Dadurch bildet sich eine Kammer zur Aufnahme des Koppelmediums, vorzugsweise Wasser. Der wesentliche Grundgedanke der Erfindung besteht nun darin, diese Kammer nicht wie im Stand der Technik bekannt, von oben nach unten zu befüllen, sondern vielmehr eine Befüllung ausgehend von der äußeren Mantelfläche des Werkstücks aus vorzunehmen. Das Fluid wird also nahe der äußeren Mantelfläche der Kammer zugeführt und steigt dann im Clustergehäuse auf. Durch diese vorteilhafte Zuführung wird erreicht, dass evtl. auftretende Luftblasen mit dem Fluid nach oben steigen und somit deutlich schneller und ohne Verwirbelungen abgeführt werden. Bei Prüfvorrichtungen nach dem Stand der Technik ist gerade dies nicht der Fall, üblicherweise strömt das Fluid den aufsteigenden Luftblasen von oben entgegen.

Erfindungsgemäß können entsprechende Fluideinlassöffnungen konstruktiv derart ausgeführt sein, dass der Fluidstrahl durch mindestens einen Kanal senkrecht auf die Rohroberfläche geleitet wird. Die Kammer wird dann von der Rohroberfläche beginnend, in Anlehnung an die Prüfkopfzeilenlänge gleichmäßig von unten nach oben blasenfrei geflutet. Mindest ein Fluidausleitkanal dient dem Entlüften und Entwässern der Kammer und mündet vorzugsweise seitlich oder oberhalb der Schwingereinheit, insbesondere oberhalb der Prüfköpfe an einer Fluidausleitöffnung. Strömungstechnisch lässt sich so eine Luftblasenbildung vor der Schwingereinheit, also zwischen dem Werkstück und den Prüfköpfen vermeiden. Die Anzahl der Fluidausleitkanäle und Fluidausleitöffnungen kann individuell an die Prüfkopfzeilenlänge bzw. die Anzahl der einzelnen Prüfköpfe angepasst werden.

Das Clustergehäuse kann erfindungsgemäß für konventionelle, oder Phased-Array Technik ausgeführt sein. Eine große Kammer eignet sich insbesondere auch für eine Phased Array Prüftechnik mit so genannter Paintbrush-Methode innerhalb des Clustergehäuses.

In einer besonders vorteilhaften Ausführungsvariante ist das Clustergehäuse in einen Kontaktkörper und ein Schwingereinheitgehäuse unterteilt. Der Kontaktkörper schließt an die Schleißsohle an, das Schwingereinheitgehäuse beinhaltet den Schwingkörper und ist gegenüber dem Kontaktkörper schwenkbar gelagert. Die Kammer erstreckt sich durch den Kontaktkörper bis in das Schwingereinheitgehäuse hinein.

Mit Hilfe von Distanzstücken ist eine Erhöhung des Clustergehäuses und damit ein größerer Abstand der Schwingereinheit zur Mantelfläche des Werkstücks realisierbar. Zu diesem Zweck ist das Schwingereinheitgehäuse unterteilt.

Zur Realisierung verschiedener Prüftechniken, z.B. Winkeleinschallung, ist die Schwingereinheit bzw. der Schwingereinheitgehäuse exakt um den Einschallpunkt auf der Mantelfläche schwenkbar. Dadurch wird erreicht, dass der Einschallpunkt auf der Mantelfläche auch beim Verschwenken der Schwingereinheit sowie bei Nutzung unterschiedlicher Distanzstücke stets beibehalten wird, da die Schwenklinie, die in einem bevorzugten Ausführungsbeispiel durch die Außenkontur des Kontaktkörpers gebildet ist, einem Kreisbogen entspricht, dessen Mittelpunkt durch den Einschallpunkt auf der Mantelfläche gebildet ist. Der Kontaktkörper weist also in Richtung des Schwingereinheitgehäuses eine konvexe Wölbung auf. Das Schwingereinheitgehäuse ist an seiner Unterseite, also an der Seite, die mit dem Kontaktkörper in Kontakt kommt, entsprechend konkav gewölbt eingeführt.

Zur Reproduzierbarkeit der Prüfeinstellung kann der Einschallwinkel in verschiedenen Winkellagen mechanisch fixiert, das Schwingereinheitgehäuse also gegenüber dem Kontaktkörper festgesetzt werden.

Es hat sich als vorteilhaft erwiesen, wenn nicht nur eine Fluideihleitlöffnung vorgesehen ist, sondern das Fluid durch mehrere Öffnungen gleichmäßig in die Kammer eingeleitet wird.

Die konkav gewölbte Schleißsohle ist auswechselbar ausgeführt, so dass die Prüfvorrichtung an verschiedene Durchmesser anpassbar ist.

Anhand der nachfolgenden Figuren wird die Erfindung näher erläutert. Das darin beschriebene Ausführungsbeispiel ist lediglich beispielhaft zu verstehen und soll den Umfang der Erfindung nicht beschränken. ES zeigen:
- Fig. 1:: Eine erfindungsgemäße Ultraschall-Prüfvorrichtung in Vorderansicht,
- Fig. 2:: die Ultraschall-Prüfvorrichtung aus Figur 1 in Seitenansicht,
- Fig. 3:: eine Prinzipdarstellung der Winkelverstellung.

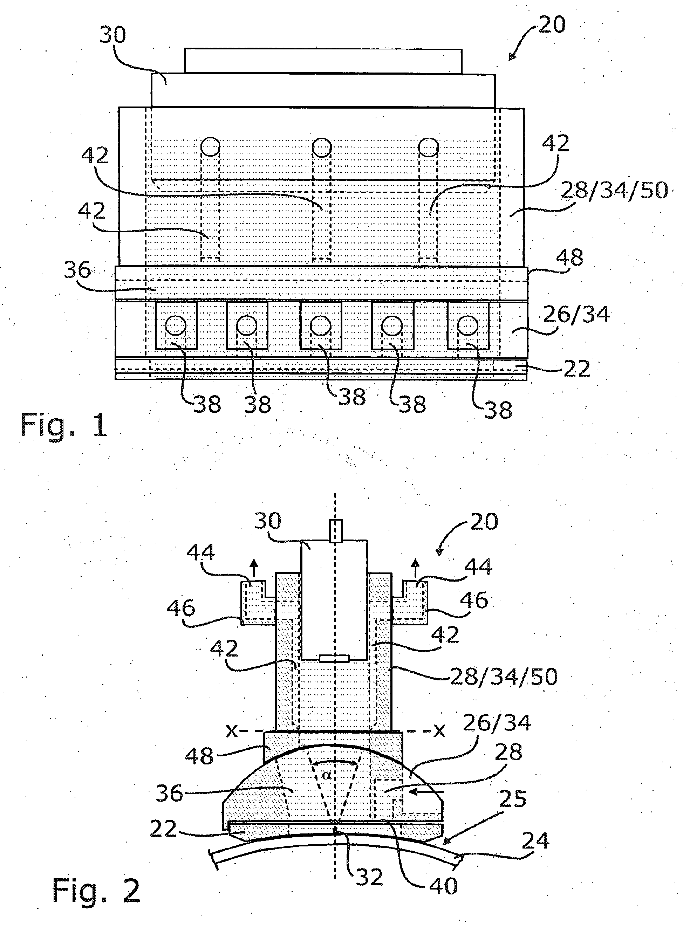

Die Figuren 1 und 2 zeigen eine erfindungsgemäße Ultraschall-Prüfvorrichtung 20. Diese weist eine Schleißsohle, 22 auf, die je nach Durchmesser eines zu prüfenden Werkstücks 24 eine konkave Wölbung aufweist, die an das zu prüfende Werkstück 24 anschließt. Die Schleißsohle 22 ist austauschbar, der Grad der Wölbung ist also an verschiedene Rohrdurchmesser bzw. äußere Mantelflächen 25 anpassbar.

Im gezeigten Ausführungsbeispiel ist die Schleißsohle 22 an einem Kontaktkörper 26 angeordnet, an den wiederum ein Schwingereinheitgehäuse 28 anschließt. Innerhalb des Schwingereinheitgehäuses 28 ist eine Schwingereinheit 30 gezeigt, die die notwendigen Sender und Empfängermodule beinhaltet. Der schall trifft unter einem Winkel α auf einen Einschallpunkt, er beträgt beispielsweise 19°. Das Schwingereinheitgehäuse 28 ist gegenüber dem Kontaktkörper 26 verschwenkbar ausgeführt. Im gezeigten Ausführungsbeispiel ist zu diesem Zweck der Kontaktkörper 26 auf seiner dem Schwingereinheitgehäuse 28 zugewandten Seite konvex ausgeführt, wohingegen das Schwingereinheitgehäuse 28 eine damit korrespondierende konkave Wölbung aufweist.

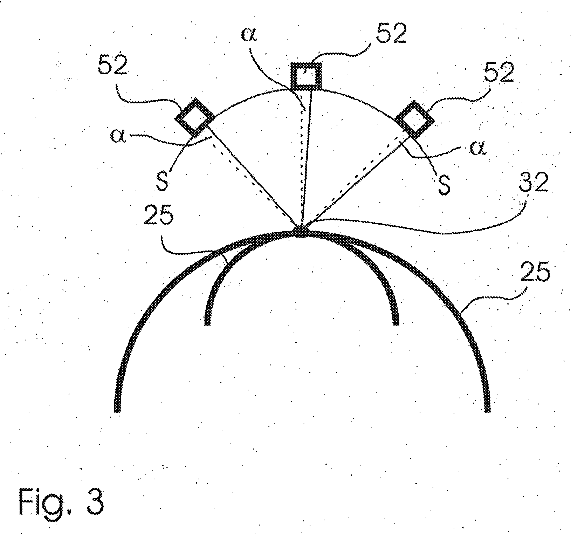

Die konkave bzw. konvexe Wölbung des Kontaktkörpers 26 und des Schwingereinheitgehäuses 28 sind derart ausgeführt, dass die sich daraus ergebende Schwenklinie S-S einem Kreisbogen entspricht, dessen Mittelpunkt durch den Einschallpunkt 32, der auf der Mantelfläche 25 des Werkstücks 24 liegt, gebildet ist. Im gezeigten Ausführungsbeispiel steht das Schwingereinheitgehäuse 28 senkrecht auf dem Kontaktkörper 26, es kann aber sowohl nach rechts als auch nach links verschwenkt werden. Die Festlegung der Schwenklinie S-S als Kreisbogen des Einschallpunkts 32 bewirkt, dass der Schall stets genau am Einschallpunkt 32 unter dem gleichen Einschallwinkel α auftrifft, unabhängig vom Grad der Verschwenkung (vergl. auch Figur 3).

Der Kontaktkörper 26 und das Schwingereinheitgehäuse 28 bilden ein Clustergehäuse 34 aus, in dem sich eine Kammer 36 befindet. Die Kammer 36 schließt an das Werkstück 24 an bzw. ist in Richtung des Werkstücks 24 geöffnet, um eine Ankopplung mittels eines Fluids bewirken zu können.

Die Kammer 36 ist über einen Fluideinleitkanal 38 befüllbar, der mit einer Fluideinleitöffnung 40 in der Kammer 36 mündet. Der Fluideinleitkanal 38 ist dabei vorzugsweise derart ausgeführt, dass das Fluid möglichst senkrecht auf die äußere Mantelfläche 25 des Werkstücks 24 geleitet wird. Figur 1 verdeutlicht, dass auch mehrere Fluideinleitkanäle 38, im gezeigten Ausführungsbeispiel fünf, vorgesehen sein können. Über die Fluideinleitkanäle 38 wird die Kammer 36 ausgehend von der Mantelfläche 25 des Werkstücks 24 geflutet, das Fluid steigt in der Kammer 36 nach oben und wird in Fluidausleitkanäle 42 geleitet. Die Fluidausleitkanäle 42 münden in Fluidausleitöffnungen 44, die das Fluid aus dem Clustergehäuse 34 bzw. aus der Ultraschall-Prüfvorrichtung 20 ausleiten. Im gezeigten Ausführungsbeispiel sind kaminförmige Fluidausleitkanalendungen 46 vorgesehen, die das Fluid von der Schwingereinheit 30 weg und oberhalb nicht gezeigter Prüfköpfe ableiten. Die Fluidausleitkanalendungen 46 sind außen am Clustergehäuse 34 angeordnet und stehen von diesem ab. Anzahl und Verlauf der Fluidausleitkanäle 42 und der Fluidausleitkanalendungen 46 sind je nach Anforderungen und konstruktiven Voraussetzungen frei wählbar.

Nicht gezeigt sind Distanzelemente, die in ein teilbares Clustergehäuse 34 eingesetzt werden können. Insbesondere in Figur 2 ist erkennbar, dass das Schwingereinheitgehäuse 28 in einen Aufsatzgehäuseabschnitt 48, der auf den Kontaktkörper 26 aufsetzt, und einen sich daran anschließenden oberen Gehäuseabschnitt 50 aufgeteilt ist. Diese beiden Gehäuseabschnitte 48, 50 stehen entlang einer Trennlinie x-x in Kontakt. Distanzstücke oder Elemente können beispielsweise zwischen den Aufsatzgehäuseabschnitt 48 und den oberen Gehäuseabschnitt 50 eingesetzt werden, wodurch der Abstand der Schwingereinheit 30 zum Werkstück 24 bzw. zum Einschallpunkt 32 variierbar ist.

Figur 3 verdeutlicht die geometrischen Zusammenhänge der erfindungsgemäßen Winkelversteilung der Ultraschallprüfvorrichtung 20. Gezeigt sind äußere Mantelflächen 25 zweier Werkstücke 24 mit unterschiedlichen Durchmessern. Der gewünschte Einschallpunkt 32 liegt auf diesen äußeren Mantelflächen 25. Weiterhin ist ein Prüfkopf 52 in drei unterschiedlichen positionen gezeigt. Weiterhin ist die Schwenklinie S-S eingezeichnet, auf der der Prüfkopf 52 verschwenkbar ist. Der der Schwenklinie S-S zugehörige Mittelpunkt ist der Einschallpunkt 32. Somit weist der Prüfkopf 52 in jeder Position auf der Schwenklinie S-S den gleichen Abstand und den gleichen Winkel zum Einschallpunkt 32 auf, wodurch die Prüfung von Werkstücken 24 unterschiedlicher Durchmesser schnell und einfach unter Beibehaltung der gewünschten Einstellwinkel durchgeführt werden kann.

## Patentansprüche

1. Ultraschall-Rohrkörper-Prüfvorrichtung (20), aufweisend
- ein Clustergehäuse (34), gebildet aus einem Kontaktkörper (26) und einem Schwingereinheitgehäuse (28), in dem eine Schwingereinheit (30) angeordnet ist,
- eine an dem Schwingereinheitgehäuse (28) angeordnete und zur Anpassung an den jeweiligen Durchmesser eines rohrförmigen Werkstücks (24) auswechselbare Schleißsohle (22) mit einer dem rohrförmigen Werkstück (24) zugewandter konkaver Wölbung, die auf eine äußere Mantelfläche (25) des Werkstücks (24) aufsetzbar ist, wobei
- die Schleißsohle (22) in Richtung des Werkstücks (24) geöffnet ist,
- die Ultraschall- Rohrkörper-Prüfvorrichtung (20) mittels eines Fluidmediums an ein rohrförmiges Werkstück (24) ankoppelbar ist und die Ultraschall-Prüfvorrichtung (20) und das rohrförmige Werkstück (24) relativ zueinander bewegbar sind,
- das Clustergehäuse (34) und die Schleißsohle (22) gemeinsam eine Kammer (36) zwischen Werkstück (24) und Schwingereinheit (30) ausbilden,
- das Clustergehäuse (34) aufweist
- mindestens einen Fluideinleitkanal (38), der mit einer Fluideinleitöffnung (40) in die Kammer (36) mündet, und derart ausgeführt und angeordnet ist, dass das Fluidmedium möglichst senkrecht auf die äußere Mantelfläche (25) des Werkstücks geleitet wird und ein Auffüllen der Kammer (36) und des Fluidausleitkanals (42) beginnend an der äußeren Mantelfläche (26) des Werkstücks (24) und dann aufsteigend erfolgen kann.
- mindestens einen Fluidausleitkanal (42) zum Entlüften und Entwässern der Kammer (36), der in die Kammer (36) mündet,
- das Schwingereinheitgehäuse (28) die Schwingereinheit (30) **beinhaltet und** gegenüber dem Kontaktkörper (26) verschwenkbar ist,
- Schall der Schwingereinheit (30) auf einen Einschallpunkt (32) auf der Mantelfläche (25) des Werkstücks (24) auftrifft und die Schwingereinheit (30) auf einer Schwenklinie S-S, die einem Kreisbogen entspricht, dessen Mittelpunkt durch den Einschallpunkt (32) gebildet ist, schwenkbar ist.

2. Ultraschall-Prüfvorrichtung (20) nach Anspruch 1, **dadurch gekennzeichnet, dass** der Fluidausleitkanal (42) eine Fluidausleitöffnung (44) aufweist, die in Bezug auf die Mantelfläche (25) oberhalb eines Prüfkopfs (52) der Schwingereinheit (30) angeordnet ist.

3. Ultraschall-Prüfvorrichtung (20) nach Anspruch 2, **dadurch gekennzeichnet, dass** der Fluidausleitkanal (42) eine Fluidausleitkanalendung (46) aufweist, die von dem Clustergehäuse (34) absteht.

4. Ultraschall-Prüfvorrichtung (20) nach einem der Ansprüche 1 bis 3, **dadurch gekennzeichnet, dass** mehrere Fluideinleitkanäle (38) vorgesehen sind.

5. Ultraschall-Prüfvorrichtung (20) nach einem der Ansprüche 1 bis 4, **dadurch gekennzeichnet, dass** mehrere Fluidausleitkanäle (42) vorgesehen sind.

6. Ultraschall-Prüfvorrichtung (20) nach einem der Ansprüche 1 bis 5, **dadurch gekennzeichnet, dass** der Abstand der Schwingereinheit (30) vom Einschallpunkt (32) mit Hilfe von Distanzstücken, die in das Clustergehäuse (34) einsetzbar sind, veränderbar ist.

7. Ultraschall-Prüfvorrichtung (20) nach einem der Ansprüche 1 bis 6, **dadurch gekennzeichnet, dass** die Schwingereinheit (30) in jeder Position in Bezug auf den Einschallpunkt (32) fixierbar ausgeführt ist.

8. Ultraschall-Prüfvorrichtung (20) nach einem der Ansprüche 1 bis 7, **dadurch gekennzeichnet, dass** die Schwingereinheit (30) mehrere Prüfköpfe (52) beinhaltet.

9. Ultraschall-Prüfvorrichtung (20) nach Anspruch 8, **dadurch gekennzeichnet, dass** die Kammer (36) Abmessungen aufweist, die eine Phased Array Prüftechnik erlaub**en**.

## Claims

1. A tubular body ultrasound inspection device (20), comprising
- a cluster housing (34) formed from a contact body (26) and a transducer unit housing (28) in which a transducer unit (30) is disposed,
- a wear sole (22), which is disposed on the transducer unit housing (28) and is replaceable for adaptation to the respective diameter of a tubular workpiece (24), with a concave curvature facing towards the tubular workpiece (24) that can be placed on an outer lateral surface (25) of the workpiece (24), wherein the wear sole (22) is open in the direction of the workpiece (24),
- the tubular body ultrasound inspection device (20) can be coupled to a tubular workpiece (24) by means of a fluid medium and the ultrasound inspection device (20) and the workpiece (24) can be moved relative to each other,
- the cluster housing (34) and the wear sole (22) together form a chamber (36) between the workpiece (24) and the transducer unit (30),
- the cluster housing (34) comprising
- at least one fluid inlet channel (38), which, with a fluid inlet opening (40), opens into the chamber (36), and is configured and disposed such that the fluid medium is guided perpendicularly onto the outer lateral surface (25) of the workpiece and a filling process of the chamber (36) and of the fluid outlet channel (42) can be carried out starting on the outer lateral surface (26) of the workpiece (24), and then in a rising manner.
- at least one fluid outlet channel (42) for venting and draining the chamber (36), which opens into the chamber (36),
- the transducer unit housing (28) includes the transducer unit (30) and is pivotable relative to the contact body (26),
- sound of the transducer unit (30) hits an insonification point (32) on the lateral surface (25) of the workpiece (24) and the transducer unit (30) is pivotable on a pivoting line S-S, which corresponds to an arc of a circle, the center of which is formed by the insonification point (32).

2. The ultrasound inspection device (20) according to claim 1, **characterized in that** the fluid outlet channel (42) comprises a fluid outlet opening (44) which, relative to the lateral surface (25), is disposed above a test probe (52) of the transducer unit (30).

3. The ultrasound inspection device (20) according to claim 2, **characterized in that** the fluid outlet channel (42) comprises a fluid outlet channel end (46) protruding from the cluster housing (34).

4. The ultrasound inspection device (20) according to any one of the claims 1 to 3, **characterized in that** several fluid inlet channels (38) are provided.

5. The ultrasound inspection device (20) according to any one of the claims 1 to 4, **characterized in that** several fluid outlet channels (42) are provided.

6. The ultrasound inspection device (20) according to any one of the claims 1 to 5, **characterized in that** the distance of the transducer unit (30) from the insonification point (32) can be changed by means of spacers that can be inserted into the cluster housing (34).

7. The ultrasound inspection device (20) according to any one of the claims 1 to 6, **characterized in that** the transducer unit (30) is configured so that it can be fixated in any position relative to the insonification point (32).

8. The ultrasound inspection device (20) according to any one of the claims 1 to 7, **characterized in that** the transducer unit (30) comprises several test probes (52).

9. The ultrasound inspection device (20) according to claim 8, **characterized in that** the chamber (36) has dimensions which permit a phased array inspection technique.

## Revendications

1. Dispositif de contrôle par ultrasons (20) de corps tubulaires, comprenant
- un boîtier cluster (34) formé d'un corps de contact (26) et d'un boîtier d'unité de transducteur (28) qui loge une unité de transducteur (30),
- une base anti-usure (22) qui est disposée sur ledit boîtier d'unité de transducteur (28) et est échangeable pour une adaptation au diamètre respectif d'une pièce (24) tubulaire et qui présente une courbure concave montrant vers la pièce (24) tubulaire, qui peut être posée sur une surface latérale extérieure (25) de la pièce (24), dans lequel ladite base anti-usure (22) est ouverte en direction de la pièce (24),
- le dispositif de contrôle par ultrasons (20) de corps tubulaires peut être couplé au moyen d'un milieu fluide à une pièce (24) tubulaire, et le dispositif de contrôle par ultrasons (20) et la pièce (24) tubulaire sont déplaçables l'un par rapport à l'autre,
- ledit boîtier cluster (34) et ladite base anti-usure (22) forment ensemble une chambre (36) entre ladite pièce (24) et ladite unité de transducteur (30),
- le boîtier cluster (34) présente :
- au moins un canal d'introduction de fluide (38) qui débouche par une ouverture d'introduction de fluide (40) dans ladite chambre (36) et est conçu et disposé de manière à ce que le milieu fluide soit dirigé perpendiculairement sur la surface latérale extérieure (25) de la pièce et qu'un remplissage de la chambre (36) et du canal d'évacuation de fluide (42) puisse se faire en commençant sur la surface latérale extérieure (26) de la pièce (24) et, puis, en montant,
- au moins un canal d'évacuation de fluide (42) destiné à la désaération et à l'évacuation d'eau de la chambre (36), qui débouche dans la chambre (36),
- le boîtier d'unité de transducteur (28) contient l'unité de transducteur (30) et est apte à pivoter par rapport au corps de contact (26),
- du son provenant de l'unité de transducteur (30) est incident sur un point d'entrée de son (32) sur la surface latérale (25) de la pièce (24), et ladite unité de transducteur (30) est apte à pivoter sur une ligne de pivotement S-S qui correspond à un arc de cercle dont le point central est formé par ledit point d'entrée de son (32).

2. Dispositif de contrôle par ultrasons (20) selon la revendication 1, **caractérisé par le fait que** ledit canal d'évacuation de fluide (42) présente une ouverture d'évacuation de fluide (44) qui est disposée, par rapport à la surface latérale (25), au-dessus d'un palpeur (52) de ladite unité de transducteur (30).

3. Dispositif de contrôle par ultrasons (20) selon la revendication 2, **caractérisé par le fait que** ledit canal d'évacuation de fluide (42) présente une terminaison de canal d'évacuation de fluide (46) qui fait saillie du boîtier cluster (34).

4. Dispositif de contrôle par ultrasons (20) selon l'une quelconque des revendications 1 à 3, **caractérisé par le fait qu'**une pluralité de canaux d'introduction de fluide (38) est prévue.

5. Dispositif de contrôle par ultrasons (20) selon l'une quelconque des revendications 1 à 4, **caractérisé par le fait qu'**une pluralité de canaux d'évacuation de fluide (42) est prévue.

6. Dispositif de contrôle par ultrasons (20) selon l'une quelconque des revendications 1 à 5, **caractérisé par le fait que** la distance séparant ladite unité de transducteur (30) du point d'entrée de son (32) peut être modifiée à l'aide de pièces d'écartement qui peuvent être insérées dans le boîtier cluster (34).

7. Dispositif de contrôle par ultrasons (20) selon l'une quelconque des revendications 1 à 6, **caractérisé par le fait que** ladite unité de transducteur (30) est réalisée de manière à être fixable dans toute position par rapport au point d'entrée de son (32).

8. Dispositif de contrôle par ultrasons (20) selon l'une quelconque des revendications 1 à 7, **caractérisé par le fait que** ladite unité de transducteur (30) comprend une pluralité de palpeurs (52).

9. Dispositif de contrôle par ultrasons (20) selon la revendication 8, **caractérisé par le fait que** ladite chambre (36) présente des dimensions qui permettent une technique de contrôle phased array.
